Europäisches Patentamt

(19) European Patent Office

Office européen des brevets

(11) Veröffentlichungsnummer: **0 012 795**
**B1**

(12) # EUROPÄISCHE PATENTSCHRIFT

(45) Veröffentlichungstag der Patentschrift:
26.08.81

(21) Anmeldenummer: 79103368.1

(22) Anmeldetag: 10.09.79

(51) Int. Cl.³: **B 29 F 3/02,** B 29 B 1/10 //
**B29F3/03**

(54) Schneckenstrangpresse für die Verarbeitung von Kunststoff, Kautschuk oder dergleichen.

(30) Priorität: 23.12.78 DE 2856097

(43) Veröffentlichungstag der Anmeldung:
09.07.80 Patentblatt 80/14

(45) Bekanntmachung des Hinweises auf die Patenterteilung:
26.08.81 Patentblatt 81/34

(84) Benannte Vertragsstaaten:
CH DE FR GB IT NL SE

(56) Entgegenhaltungen:
DE-A-1 554 756
DE-A1-2 626 998
DE-A1-2 650 742
US-A-2 946 089

(73) Patentinhaber: HERMANN BERSTORFF Maschinenbau
GmbH, An der Breiten Wiese 3/5,
D-3000 Hannover 61 (DE)

(72) Erfinder: Anders, Dietmar, Lauenburger Hof 13,
D-3000 Hannover 61 (DE)

## Schneckenstrangpresse für die Verarbeitung von Kunststoff, Kautschuk oder dergleichen

Die Erfindung betrifft eine Schneckenstrangpresse für die Verarbeitung von Kunststoff, Kautschuk oder dergleichen mit einem Zylinder und einer darin angeordneten, sich drehenden Schnecke, die aus einzelnen, vertikal geteilten Abschnitten besteht, die auf einem Zuganker oder dergleichen aufgezogen und gegeneinander gepresst oder mittels Keilverzahnung miteinander verbunden sind.

Aus der US-A-2 946 089 ist eine derartige Schneckenpresse bekannt.

Wenn einzelne Schneckenabschnitte dieser Schnecke ausgetauscht werden sollen, so muss entweder die Schnecke selbst aus der Schneckenstrangpresse in Förderrichtung herausgezogen werden oder alternativ der Zylinder abgezogen werden. Danach wird der üblicherweise mit der Schneckenspitze verschraubte Zuganker gelöst und die einzelnen, vertikal geteilten Schneckenabschnitte können gegeneinander ausgetauscht oder durch neue ersetzt werden. Der Austausch einzelner Schneckenteile ist sehr zeitaufwendig und kompliziert durchzuführen.

Der Erfindung liegt die Aufgabe zugrunde, eine Schneckenstrangpresse bereitzustellen, bei der in äusserst einfacher Weise einzelne Schneckenabschnitte an beliebiger Stelle ganz oder teilweise ausgewechselt werden können, ohne dass die Schneckenstrangpresse selbst durch Abzug des Zylinders bzw. Herausziehen der Schnecke demontiert werden muss.

Die Lösung dieser Aufgabe besteht nach der Erfindung darin, dass einzelne Schneckenabschnitte in Schneckenachsrichtung teilbar ausgebildet sind und dass die diese Schneckenabschnitte radial etwa in gleicher Breite umgebenden Zylinderabschnitte ebenfalls in Schneckenachsrichtung teilbar ausgebildet sind.

Weitere Ausgestaltungen der Erfindung sind in den Ansprüchen 2 bis 4 enthalten.

Die durch die Erfindung erreichten Vorteile sind insbesondere darin zu sehen, dass beim Austausch einzelner Schneckenabschnitte weder die Schnecke aus der Schneckenstrangpresse herausgezogen noch der Extruderzylinder abgezogen werden muss. Durch einfaches Lösen der Spannschrauben wird erreicht, dass die axial geteilten Zylinderabschnitte abgenommen werden können, um an die Schneckenabschnitte zu gelangen. Danach wird die Verschraubung der Schneckenabschnitte gelöst und die eine Hälfte des mittig geteilten Abschnittes kann nach unten und die andere Hälfte nach oben von dem Schneckenabschnitt abgenommen und durch einen anderen Abschnitt, beispielsweise anderer Steigung oder Gangtiefe, ersetzt werden. Danach brauchen lediglich die diesen Abschnitt umgebenden beiden Zylinderhälften wieder in die stufenförmig abgesetzten, angrenzenden Zylinderteile eingesetzt und durch die an den Ringflanschen angreifenden Spannschrauben miteinander verspannt zu werden.

Anhand der Zeichnung wird nachstehend ein Ausführungsbeispiel einer erfindungsgemässen Schneckenstrangpresse für einen Entgasungsextruder näher erläutert.

Fig. 1 zeigt einen Längsschnitt durch einen Entgasungsextruder.

Fig. 2 zeigt einen Querschnitt gemäss der Linie II-II in Fig. 1.

In einem inneren Zylinder 2, 2a ist eine Schnecke 1 angeordnet. Um den inneren Zylinder 2, 2a ist ein äusserer Zylinder 3, 3a angeordnet. Das zu verarbeitende Material wird in den Eingabetrichter 4 eingegeben und durch die auf der Schnecke angeordneten Schneckenstege 5 in Richtung auf die Ausstossöffnung der Schneckenstrangpresse gefördert.

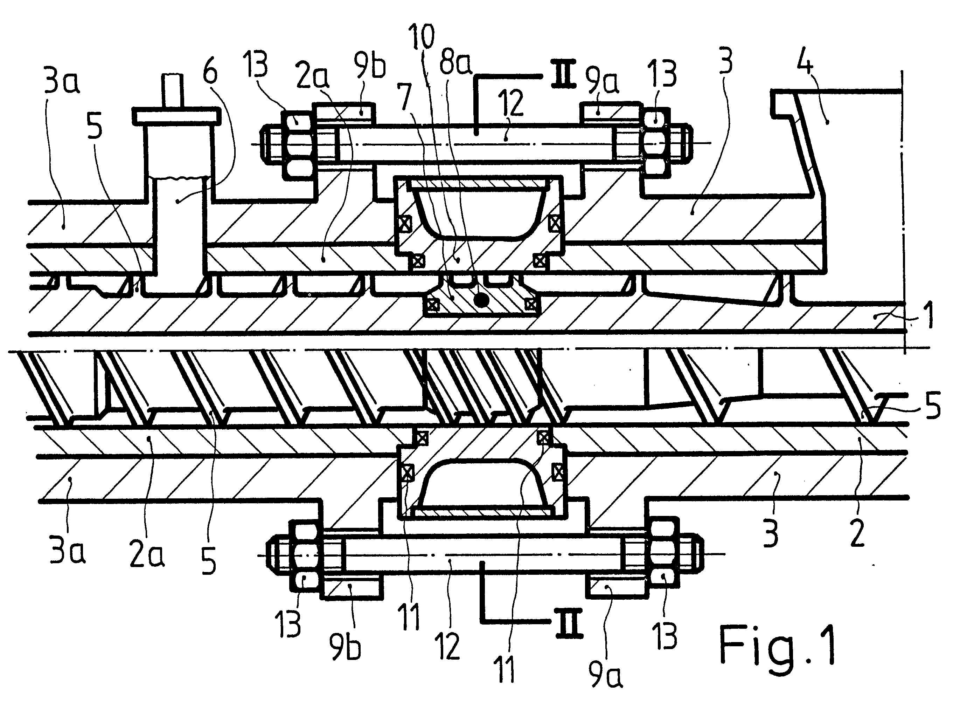

Die in Fig. 1 gezeigte Schnecke 1 zeigt einen auswechselbar gestalteten Schneckenabschnitt 7, der mittig geteilt ist und aus den Teilen 7a und 7b besteht.

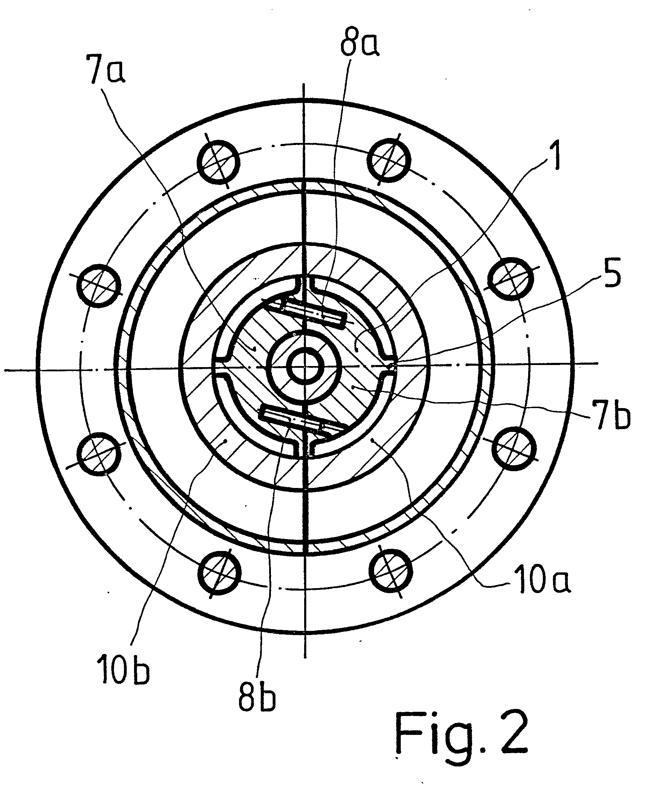

Aus Fig. 2 wird ersichtlich, dass beide Teile 7a und 7b durch Schrauben 8a und 8b miteinander verschraubbar sind. Der mittig geteilte Schneckenabschnitt 7 kann somit durch einfaches Lösen der Schrauben 8a und 8b von der Schnecke 1 entfernt werden und durch einen anderen Abschnitt anderer Gangsteigung bzw. Gangtiefe bzw. auch durch eine Stauring (Blister) oder ein mehrgängiges Teil ersetzt werden.

An den äusseren Zylinderteilen 3 und 3a sind Ringflansche 9a und 9b angeordnet. Zwischen den Zylinderteilen 2 und 2a sowie 3 und 3a ist ein mittig geteilter Zylinderabschnitt 10 mit Teilen 10a und 10b angeordnet und an beiden Stirnseiten stufenförmig ausgebildet, um eine bessere Abdichtung zu gewährleisten. Zusätzlich sind an den Stirnseiten ringförmige Dichtungsringe 11 vorgesehen.

Die mittig geteilten Zylinderteile 10a und 10b werden zwischen die Zylinderteile 3, 3a und 2, 2a eingesetzt und mitteils an den Ringflanschen 9a 9b angreifender Spannbolzen 12 gehalten, die durch Spannmuttern 13 unter Druck gesetzt werden. Durch die Spannmuttern 13 werden somit die Zylinderteile 3 und 3a fest gegen den mittig geteilten Zylinderabschnitt 10 gepresst, wodurch auf einfache Weise eine gute Abdichtung erzielt wird.

Beschreibung des Auswechselvorganges von Schneckenabschnitten:

Zunächst werden die Spannmuttern 13 gelöst, wodurch die Pressung an den Stirnseiten der mittig geteilten Zylinderabschnitte 10 aufgehoben wird. Deren Teile 10a und 10b lassen sich somit leicht lösen. Danach werden die Schrauben 8a und 8b der Schneckenteile 7a und 7b gelöst, wodurch die Schneckenabschnitte 7 entfernt und durch andere ersetzt werden können. Die Schneckenabschnitte 7 können ebenfalls aus mehr als zwei axial geteilten Teilen bestehen.

Der Austausch einzelner Schneckenabschnitte 7 ist somit äusserst einfach durchführbar, wobei weder die Schnecke aus dem Zylinder herausgezogen noch der Zylinder von der Schnecke abgezogen werden muss.

Die in Fig. 1 gezeigte Schneckenstrangpresse ist mit einer Entgasungsöffnung 6 versehen. Die technologischen Vorteile der vorliegenden Erfindung werden am Beispiel einer Entgasungsschneckenstrangpresse erläutert.

Ein vor einer Entgasungsöffnung 6 angeordnetes Rückstauelement, welches als mehrgängiger mittig geteilter Schneckenabschnitt ausgebildet ist, sorgt dafür, dass in den danach angeordneten Raum zwischen der Schnecke und dem Zylinder im Bereich der Entgasungsöffnung nur soviel Material eintritt, wie die folgenden Schneckenabschnitte fördern können, ohne dass die Schnekkengänge unterhalb der Entgasungszone ganz gefüllt sind.

Da die Förderleistung der vorderen Schneckenabschnitte ausser von der Drehzahl auch von dem jeweiligen Werkzeugwiderstand am Schneckenstangpressenaustritt abhängt, ist es insbesondere bei niedrigen Schneckendrehzahlen und bei hohem Werkzeugwiderstand nicht auszuschliessen, dass sich die Schmelze bis in die Entgasungszone zurückstaut und diese überflutet d.h. funktionsunfähig macht.

In einem solchen Fall muss die Förderleistung eines Teiles des ersten Schneckenabschnittes durch den Einsatz eines flach geschnittenen Schneckenabschnittes, d.h. durch niedrige Schneckengänge oder eines Staurings (Blister), vermindert werden, so dass der gewünschte Durchsatz eine höhere Schneckendrehzahl erfordert, wodurch sich eine höhere Förderleistung und damit ein höheres Druckaufbauvermögen durch die nachfolgenden Schneckenabschnitte ergibt.

Wenn in einem solchen Fall das Rückstauelement, d.h. das Teil 7 des Entgasungsextruders, nicht ausgetauscht wird gegen ein Element, welches weniger Rückdruck aufbaut, muss die Funktionstüchtigkeit der Schnecke in Frage gestellt werden.

Gemäss der Erfindung ist der Austausch des Schneckenabschnittes 7, welches die Ausstosslei- stung des ersten Schneckenabschnittes vermin- dert, sehr einfach möglich, ohne dass die gesamte Schneckenstrangpresse demontiert werden muss.

Die Auswechslung einzelner Schneckenteile an bestimmten Stellen der Schneckenstrangpresse bietet weiterhin den Vorteil, dass die Schneckenstrangpresse an die Verarbeitung der verschiedenen Materialien mühelos angepresst werden kann. Wenn beispielsweise ein hochtemperaturempfindliches Material verarbeitet werden soll, können einzelne Teile der Schnecke, die eine hohe Scherwirkung und somit eine Temperaturerhöhung des Materials verursachen würden, gegen Schneckenteile ausgetauscht werden, die eine schonende Materialbehandlung, beispielsweise durch tiefergeschnittene Gänge, gewährleisten.

Die Vorteile der erfindungsgemässen Schnek- kenstrangpresse sind besonders hoch einzuschät- zen bei Schneckenstrangpressen mit sehr grossen Schnecken für die Homogenisierung von Hochdruck-Polyäthylen, die einen Durchmesser von 600 mm aufweisen können. Derartige Extruder haben eine Länge bis zu 20 m. Es ist offensichtlich, dass der Austausch einer 20 m langen und einen Durchmesser von 600 mm aufweisenden Schnekke äusserst problematisch und umständlich ist. Das Abziehen des Extruderzylinders verbietet sich bei derartig grossen Extrudern allein schon deshalb, weil an den einzelnen Zylinderteilen Temperiereinrichtungen angeschlossen sind, die beim Abziehvorgang zusätzlich demontiert werden müssten.

Wenn eine Schneckenstrangpresse mit derartigen Abmessungen an kristischen Stellen, beispielsweise vor Entgasungsöffnungen, mit einem auswechselbar gestalteten Schnecken- und Zylinderteil ausgerüstet wird, ist die Anpassung der Schneckenstrangpresse an bestimmte Betriebsbedingungen sehr konstengünstig und ohne grossen Zeitaufwand durchführbar. Die nachträgliche Anpassbarkeit der Schnecke ist insbesondere auch deswegen von grosser Bedeutung, weil die Förderleistung derartiger Schnecken nicht mit letzter Sicherheit rechnerisch ermittelt werden kann.

## Patentansprüche

1. Schneckenstrangpresse für die Verarbeitung von Kunststoff, Kautschuk oder dergleichen mit einem Zylinder und einer darin angeordneten, sich drehenden Schnecke (1), die aus einzelnen, vertikal geteilten Abschnitten besteht, die auf einem Zuganker aufgezogen und gegeneinander gepresst oder mittels Keilverzahnung miteinander verbunden sind, dadurch gekennzeichnet, dass einzelne Schneckenabschnitte (7) in Schneckenachsrichtung teilbar ausgebildet sind und dass die diese Schneckenabschnitte (7) etwa in gleicher Breite umgebenden Zylinderabschnitte (10) ebenfalls in Schneckenachsrichtung teilbar ausgebildet sind.

2. Schneckenstrangpresse nach Anspruch 1, dadurch gekennzeichnet, dass die in Schnecken- achsrichtung teilbar ausgebildeten Schneckenab- schnitte (7) miteinander verschraubt sind.

3. Schneckenstrangpresse nach Anspruch 1 oder 2, dadurch gekennzeichnet, dass die in Schneckenachsrichtung geteilten Zylinderabschnitte (10) an beiden Stirnseiten stufenförmig abgesetzt sind.

4. Schneckenstrangpresse nach einem der Ansprüche 1 bis 3, dadurch gekennzeichnet, dass an Zylinderteilen (3, 3a), an deren Stirnseiten ein mittig geteilter Zylinderabschnitt (10) anliegt, Ringflansche (9a, 9b) ausgebildet sind für die Aufnahme von durch Spannmuttern (13) gesicherten Spannbolzen (12).

## Revendications

1. Boudineuse à vis pour le traitement des matières plastiques, du caoutchouc ou analogues, comportant un cylindre et une vis sans fin (1) qui y est disposée et qui y tourne, qui se compose de divers éléments divisés verticalement, qui sont montés sur un tirant et pressés l'un contre l'autre ou liés les uns aux autres au moyen d'un engrenage à clavettes, caractérisée en ce que les divers éléments de vis sans fin (7) sont formés de manière à pouvoir être divisés dans la direction de l'axe de la vis sans fin et en ce que les éléments de cylindre (10) entourant ces éléments de vis sans fin (7) à environ la même distance sont également formés de manière à pouvoir être divisés dans la direction de l'axe de la vis sans fin.

2. Boudineuse à vis selon la revendication 1, caractérisée en ce que les éléments de vis sans fin (7) formés des manière à pouvoir être divisés dans la direction de l'axe de la vis sans fin sont vissés les uns aux autres.

3. Boudineuse à vis selon la revendication 1 ou 2, caractérisée en ce que les éléments de cylindre 10 divisés dans la direction de l'axe de la vis sans fin sont décalés en échelons sur les deux côtés frontaux.

4. Boudineuse à vis selon l'une des revendications 1 à 3, caractérisée en ce que sur des parties de cylindre (3, 3a) sur les côtés frontaux desquelles se trouve un élément de cylindre (10) divisé en son milieu, sont formées des collerettes annulaires (9a, 9b) pour prendre des boulons de tension (12) assurés par des écroux tendeurs (13).

**Claims**

1. Worm feed extruder for processing of synthetics, rubber and like materials, having a cylinder within which is arranged a rotatable feed worm (1), the feed worm consisting of individual vertically divided segments mounted on a through-bolt and biased against one another or are connected by means of a wedge-toothing, characterized in that the individual feed worm segments (7) are divisible constructed in the direction of the feed worm axis and that the cylinder segments (10) which radially surround the feed worm segments are constructed divisible nearly in the same width and also in the axial direction of the feed worm.

2. Worm feed extruder according to claim 1, characterized in that the feed worm segments (7) are constructed divisible in the axial direction of the feed worm and are screwed to one another.

3. Worm feed extruder according to claim 1 and 2, characterized in that the cylinder segments (10) which are divisible in the axial direction of the feed worm are recessed step-wise on both end faces.

4. Worm feed extruder according to claim 1 to 3, characterized in that the cylinder parts (3, 3a) against the end faces of which the centrally divided cylinder parts (10) lie are provided with ring-shaped flanges (9a, 9b) for mounting of tensioning rods (12) secured by turn screws (13).

Fig.1

Fig. 2